# EUROPEAN PATENT SPECIFICATION

(11) **EP 1 023 207 B1**
(45) Date of publication and mention of the grant of the patent: **12.12.2001**
(21) Application number: 97909753.2
(22) Date of filing: 24.10.1997
(51) Int. Cl.: B60R 25/04, B60R 25/08

(54) **AUTOMOTIVE VEHICLE**
KRAFTFAHRZEUG
AUTOMOBILE

(43) Date of publication of application: 02.08.2000
(73) Proprietor: Toppenberg, Erich Emanuel, 1035 AH Amsterdam (NL)
(72) Inventor: Toppenberg, Erich Emanuel, 1035 AH Amsterdam (NL)
(74) Representative: Van Breda, Jacobus
(86) International application number: NL9700587
(87) International publication number: WO9921743

(56) References cited:
- NL-C- 1 003 843
- US-A- 3 579 285
- US-A- 4 546 846

## Description

The invention relates to a valve gear for an automotive vehicle provided with a hydraulic brake system comprising a control unit, brake lines and friction organs, wherein the brake lines serve to provide a hydraulic coupling between the control unit and the friction organs, which valve gear is suitable for comprising in the brake lines and under a bonnet, which is operationable from the inside, and which valve gear can be coupled with an ignition lock of the vehicle such that when contact is switched off, the valve gear blocks the brake lines to the friction organs, said valve gear comprising a housing with chambers and a shaft movable in the longitudinal direction in the housing through the chambers with a first chamber being connected to a brake line coupling the first chamber with the control unit, and a second chamber being connected to a brake line coupling the second chamber with at least a friction organ, and that the shaft has a channel passage which in a first position of the shaft hydraulically couples the first and second chamber and which in a second position of the shaft interrupts the hydraulic coupling of the first and the second chamber.

An automotive vehicle with such a valve gear is equipped to prevent theft, or at least to render it more difficult and is known from US-A-4,546,846.

The object of the invention is to further improve the anti-theft function with regard to the automotive vehicle. To this end the valve gear for an automotive vehicle according to the invention is equipped such that on, in or at the housing a guiding means is provided for a cable for the operation of the bonnet, said guiding means being provided with a recess for the reception of an end of the movable shaft fitting into said recess.

The recess in the guiding means is then preferably asymmetrical and the end of the movable shaft has an asymmetrical shape coinciding with that of the recess.

The safety device then functions thus that when the movable shaft is in the second position, the end of the shaft is located in the recess of the guiding means.

The drive for the movement of the shaft may be of the electromagnetic kind such as, for instance, an electromotor. However, this means that the safety device is dependent on the presence of an aggregate or battery in the vehicle. Should these provisions fail, deactivation of the safety device would not be possible. In order to ensure that under such circumstances the lock can be deactivated, the valve gear is preferably coupled with a mechanical key-operated lock suitable for putting the movable shaft in the first position. The safety device discussed above can also easily be built into existing vehicles which do not yet have such a provision. The invention comprises also a vehicle provided with a valve gear of the kind described above.

The invention will now be further elucidated with reference to the drawing, in which
Fig. 1 shows a first embodiment of the automotive vehicle according to the invention in the released position;
Fig. 2 shows the automotive vehicle in the blocked position;
Fig. 3 shows a second embodiment of the automotive vehicle according to the invention in the released position;
Fig. 4 shows the automotive vehicle in accordance with Fig. 3 in the blocked position; and
Fig. 5 shows the automotive vehicle according to the invention with a schematically represented bonnet.

Identical reference numbers refer to identical parts.

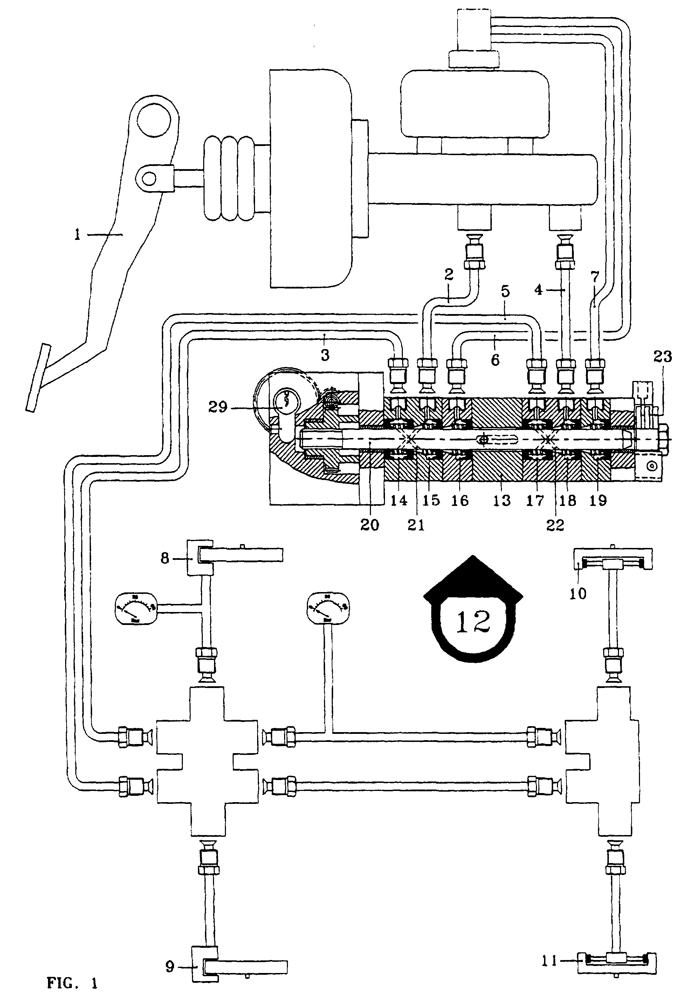

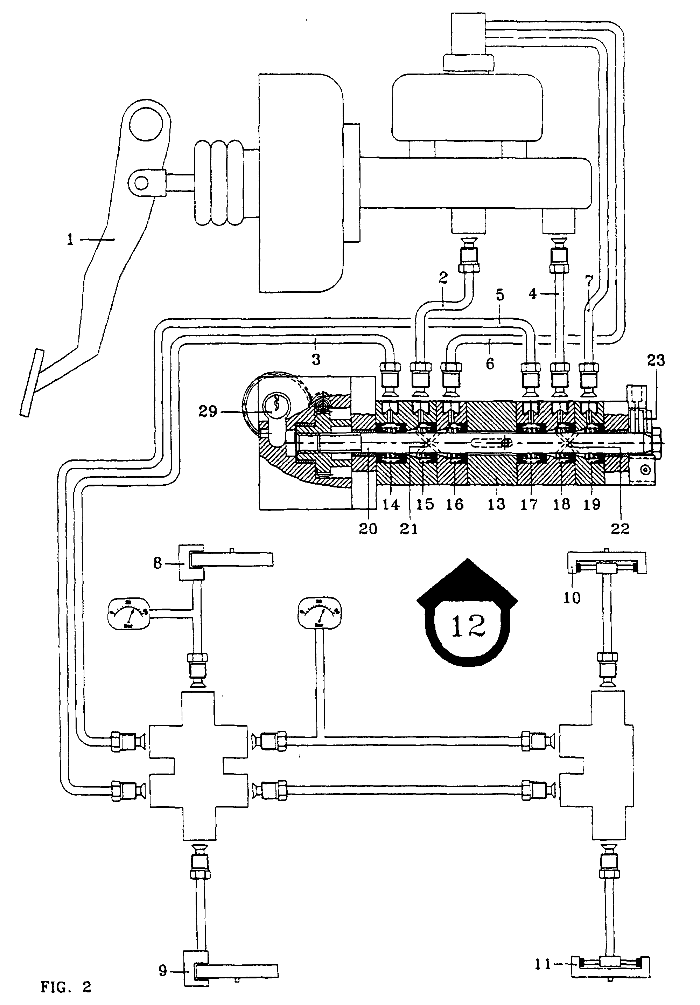

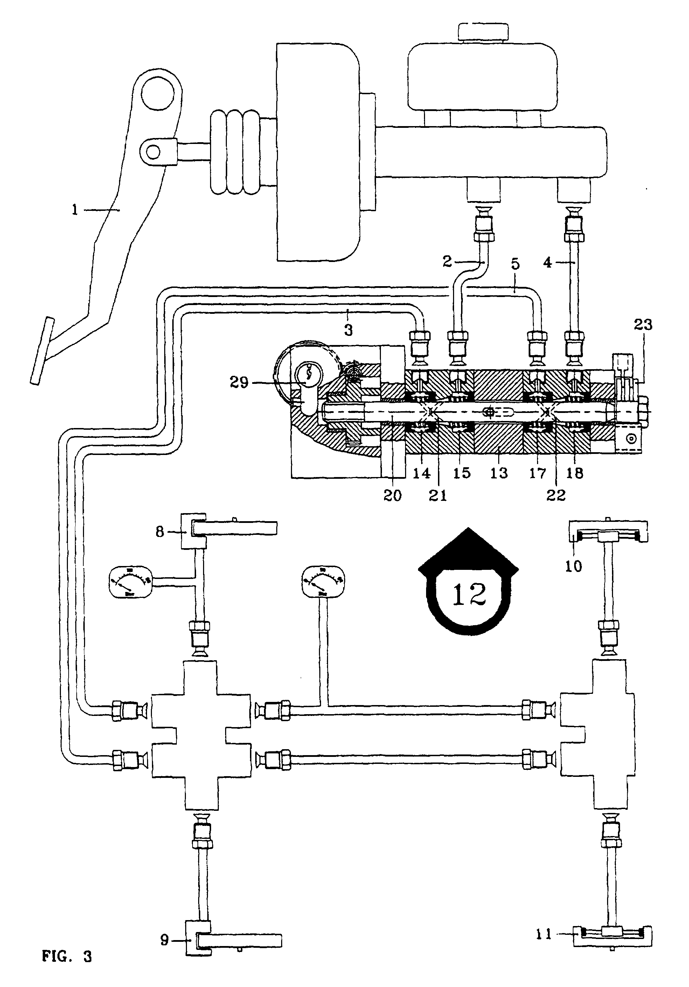

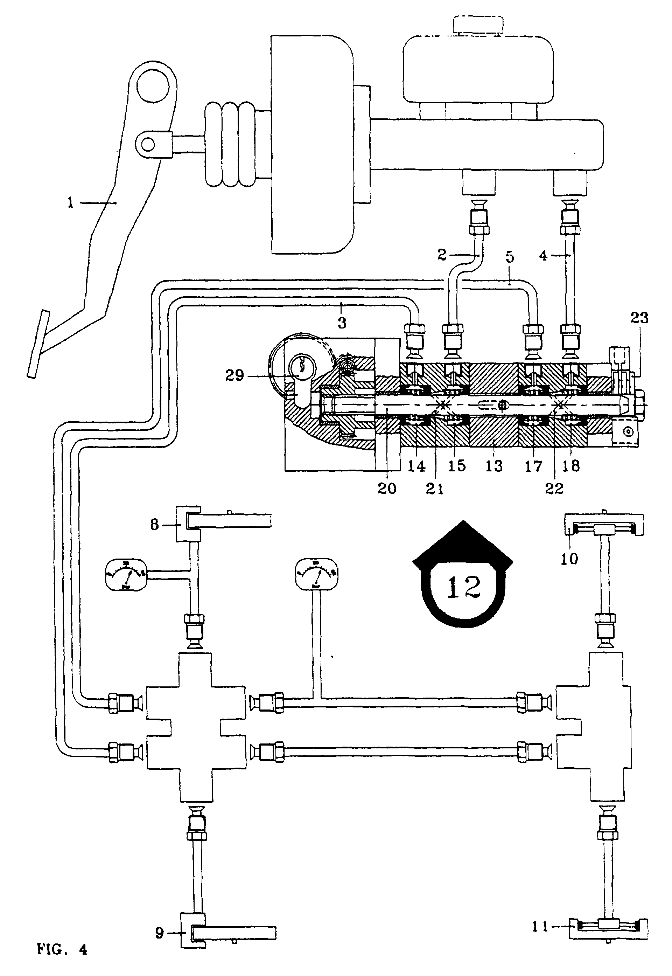

Figs. 1, 2, 3 and 4 show an automotive vehicle's hydraulic braking system comprising a control unit 1, brake lines 2, 3, 4, 5, 6 and 7, and friction organs 8, 9, 10 and 11, wherein the brake lines provide a hydraulic coupling between the control unit 1 and the friction organs 8, 9, 10 and 11. The brake lines 2, 3, 4, 5, 6 and 7 comprise a valve gear indicated by reference number 12 which is coupled to a vehicle's ignition lock (not shown) such that when the ignition is switched off, the valve gear 12 blocks the brake lines 3 and 5 leading to the friction organs 8, 9, 10 and 11. In this way, a braking pressure already applied to the friction organs is maintained, so that the wheels of the vehicle stay locked. To this end the valve gear 12 comprises a housing 13 with chambers 14, 15, 16, 17, 18 and 19 and a shaft 20 movable longitudinally through the chambers in the housing 13, wherein a first chamber 15, 18 is connected to a brake line 2, 4, coupling the first chamber 15, 18 with the control unit 1, and a second chamber 14, 17 is connected to a brake line 3, 5, coupling the second chamber 14, 17 with at least a friction organ 8, 9, 10, 11. The shaft is provided with a channel passage 21, 22 which, when the shaft 20 is in a first position as shown in Fig. 1 and Fig. 3, hydraulically couples the first chamber 15, 18 and the second chamber 14, 17 while, when the shaft 20 is in a second position, the hydraulic coupling of the first chamber 15, 18 and the second chamber 14,17 is interrupted, as shown in Fig. 2 and Fig. 4.

The shaft 20 is provided, for instance, with an electromotoric drive for moving the shaft 20 in the longitudinal direction between the above-mentioned first and second position so that the first position of the shaft 20 coincides with the vehicle's activated contact, with the friction organs 8, 9, 10 and 11 being operationable, and the second position of the shaft coincides with a switched-off contact, with the friction organs 8, 9 10 and 11 being locked. Said electromotoric drive is in itself known to the expert and is therefore not further illustrated in the drawing.

Preferably the channel passage 21, 22 is formed as a bore running at an angle to the longitudinal axis of the shaft, or as a plurality of such bores, as shown in Fig. 1 to 4.

Each of the chambers 14, 15, 16, 17, 18 and 19 is provided with a gasket for sealing the passage of the shaft.

The difference between the embodiment shown in Figs. 1 and 2 and the embodiment shown in Fig. 3 and 4, is that in Fig. 3 and 4 the chambers 16 and 19 with which the brake lines 6 and 7 are connected, and which serve to return the oil into the braking system, are absent. However, as can be seen from the above description, the effect of the security system is not different.

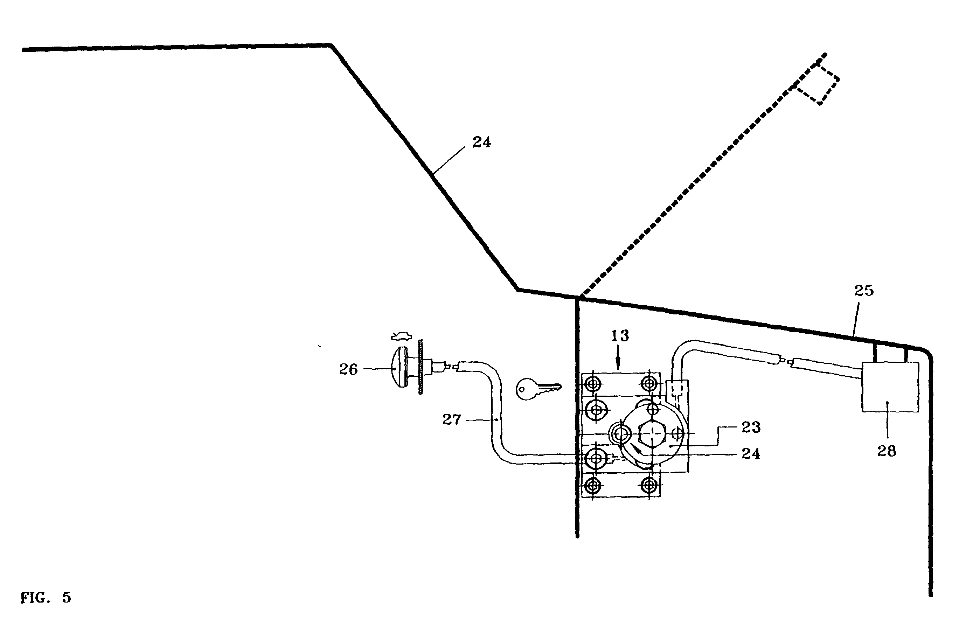

At the cross-cut side of the housing 13 of the valve gear 12, reference number 23 indicates a guiding means which is shown in a front view in Fig. 5. An automotive vehicle, shown in this Figure in outline 24, has a bonnet 25 which can be opened from the inside, and which is represented in the opened position by the dotted line. The bonnet 25 may be opened by means of a knob 26 inside the automotive vehicle. To this knob 26 a cable 27 is coupled which via the guiding means 23 operates the closing organ 28 of the bonnet 25. The guiding means 23 is provided with a central recess 24 which is shaped asymmetrically. Said recess is suitable for the reception of the end of the movable shaft 20 which is shaped to be asymmetrical to coincide with the shape of the recess 24. When the movable shaft 20 is in the second position, as described above, that is to say when the safety device is activated, the end of the shaft 20 is located in the recess 24 of the guiding means 23, as a result of which the opening action of the bonnet 25 is blocked. This provides extra security against theft, as preferably the valve gear according to the invention is also mounted under the bonnet, rendering said valve gear inaccessible to unauthorized persons.

Figures 1 to 4, finally, show a schematical representation of a mechanical key-operated lock 29, suitable for putting the movable shaft 20 into the first position, whereby the safety device can be put into the released position in the event of unexpected failure of the aggregate or the battery serving the shaft movement.

It will be clear from the above that the device according to the invention may be realized in various forms, and it is possible to go beyond the embodiments described above while yet remaining within the scope of protection as provided by the appended claims.

## Claims

1. Valve gear (12) for an automotive vehicle provided with a hydraulic brake system comprising a control unit (1), brake lines (2, 3, 4, 5, 6, 7) and friction organs, wherein the brake lines serve to provide a hydraulic coupling between the control unit (1) and the friction organs (8, 9, 10, 11), which valve gear is suitable for being comprised in the brake lines and under a bonnet, which is operationable from the inside, and which valve gear can be coupled with an ignition lock of the vehicle such that when contact is switched off, the valve gear (12) blocks the brake lines (3, 5) to the friction organs (8, 9, 10, 11), said valve gear (12) comprising a housing (13) with chambers (14, 15, 17, 18) and a shaft (20) movable in the longitudinal direction in the housing (13) through the chambers with a first chamber being connected to a brake line coupling the first chamber (15, 18) with the control unit (1), and a second chamber (14, 17) being connected to a brake line (3, 5) coupling the second chamber (14, 17) with at least a friction organ (8, 9, 10, 11), and that the shaft (20) has a channel passage (21, 22) which in a first position (fig. 1, 3) of the shaft (20) hydraulically couples the first (15, 18) and second (14, 17) chamber and which in a second position of the shaft (20) interrupts the hydraulic coupling of the first (15, 18) and the second (14, 17) chamber, **characterized in that** on, in or at the housing (13) a guiding means (23) is provided for a cable (27) for the operation of the bonnet (25), said guiding means (23) being provided with a recess (24) for the reception of an end of the movable shaft (20) fitting into said recess (24) so as to cause that the opening action of the bonnet (25) is blocked.

2. Valve gear for an automotive vehicle according to claim 1, **characterized in that** the recess (24) in the guiding means (23) is asymmetrical, and the end of the movable shaft (20) has an asymmetrical shape coinciding with that of the recess (24).

3. Valve gear for an automotive vehicle according to claim 1 or 2, **characterized in that** when the movable shaft (20) is in the second position, the end of the shaft (20) is located in the recess (24) of the guiding means (23).

4. Valve gear for an automotive vehicle according to one of the preceding claims, **characterized in that** the valve gear (12) is coupled with a mechanical key-operated lock (29) suitable for putting the movable shaft (20) in the first position.

5. An automotive vehicle provided with a valve gear according to any one of claims 1-4.

## Patentansprüche

1. Ventilsystem (12) für ein Kraftfahrzeug, das mit einem hydraulischen Bremssystem versehen ist, das eine Steuerungseinheit (1), Bremsleitungen (2, 3, 4, 5, 6, 7) und Reibungsorgane aufweist, wobei die Bremsleitungen dazu dienen, um eine hydraulische Kopplung zwischen der Steuerungseinheit (1) und den Reibungsorganen (8, 9, 10, 11) zu schaffen, wobei das Ventilsystem geeignet ist, um in den Bremsleitungen und unter einer Haube umfaßt zu sein, die von innen betreibbar ist, und wobei das Ventilsystem mit einem Zündschloß des Fahrzeugs gekoppelt sein kann, derart, daß das Ventilsystem (12), wenn der Kontakt abgeschaltet ist, die Bremsleitungen (3, 5) zu den Reibungsorganen (8, 9, 10, 11) blockiert, wobei das Ventilsystem (12) ein Gehäuse (13) mit Kammern (14, 15, 17, 18) und eine Welle (20) aufweist, die in der longitudinalen Richtung in dem Gehäuse (13) durch die Kammern bewegbar ist, wobei eine erste Kammer mit einer Bremsleitung verbunden ist, die die erste Kammer (15, 18) mit der Steuerungseinheit (1) koppelt, und wobei eine zweite Kammer (14, 17) mit einer Bremsleitung (3, 5) verbunden ist, die die zweite Kammer (14, 17) mit zumindest einem Reibungsorgan (8, 9, 10, 11) koppelt, wobei die Welle (20) einen Kanaldurchgang (21, 22) aufweist, der in einer ersten Stellung (Figuren 1, 3) der Welle (20) die erste (15, 18) und die zweite (14, 17) Kammer hydraulisch koppelt, und der in einer zweiten Stellung der Welle (20) die hydraulische Kopplung der ersten (15, 18) und der zweiten (14, 17) Kammer unterbricht, **dadurch gekennzeichnet, daß** auf, in oder an dem Gehäuse (13) eine Führungseinrichtung (23) für ein Kabel (27) für den Betrieb der Motorhaube (25) vorgesehen ist, wobei die Führungseinrichtung (23) mit einer Ausnehmung (24) zum Aufnehmen eines Endes der bewegbaren Welle (20) versehen ist, die in die Ausnehmung (24) paßt, um zu bewirken, daß die Öffnungsaktion der Motorhaube (25) blockiert ist.

2. Ventilsystem für ein Kraftfahrzeug gemäß Anspruch 1, **dadurch gekennzeichnet, daß** die Ausnehmung (24) in der Führungseinrichtung (23) asymmetrisch ist, und daß das Ende der bewegbaren Welle (20) eine asymmetrische Form aufweist, die mit derjenigen der Ausnehmung (24) übereinstimmt.

3. Ventilsystem für ein Kraftfahrzeug gemäß Anspruch 1 oder 2, **dadurch gekennzeichnet, daß** sich das Ende der Weile (20), wenn sich die bewegbare Welle (20) in der zweiten Stellung befindet, in der Ausnehmung (24) der Führungseinrichtung (23) befindet.

4. Ventilsystem für ein Kraftfahrzeug gemäß einem der vorhergehenden Ansprüche, **dadurch gekennzeichnet, daß** das Ventilsystem (29) mit einem mechanischen, schlüsselbetriebenen Schloß (29) gekoppelt ist, das geeignet zum Setzen der bewegbaren Welle (20) in die erste Stellung ist.

5. Ein Kraftfahrzeug, das mit einem Ventilsystem gemäß einem der Ansprüche 1 bis 4 versehen ist.

## Revendications

1. Mécanisme à soupape (12) pour véhicule automobile présentant un système de freinage hydraulique, comprenant une unité de commande (1), des conduites de freinage (2, 3, 4, 5, 6, 7) et des organes de friction, les conduites de freinage servant à fournir un couplage hydraulique entre l'unité de commande (1) et les organes de friction (8, 9, 10, 11), ledit mécanisme à soupape étant adapté pour être ménagé dans les conduites de freinage et sous un capuchon, ledit mécanisme étant actionnable depuis l'intérieur, et pouvant être couplé avec une serrure de contact du véhicule, de sorte que lorsque le contact est coupé, le mécanisme à soupape (12) bloque les conduites de freinage (3, 5) conduisant aux organes de friction (8, 9, 10, 11), ledit mécanisme à soupape (12) comprenant un boîtier (13) pourvu de compartiments (14, 15, 17,18) et un arbre (20) mobile dans la direction longitudinale dans le boîtier (13) au travers des compartiments, un premier compartiment étant relié à la conduite de freinage couplant le premier compartiment (15, 18) à l'unité de commande (1), et un deuxième compartiment (14, 17) étant relié à la conduite de freinage (3, 5) couplant le deuxième compartiment (14, 17) avec au moins un organe de friction (8, 9, 10, 11), et de sorte que l'arbre (20) présente un canal de passage (21, 22) qui, dans une première position (Fig. 1, 3) de l'arbre (20), assure le couplage hydraulique des premier (15, 18) et deuxieme (14, 17) compartiments, et qui, dans une deuxième position de l'arbre (20), interrompt le couplage hydraulique des premier (15, 18) et deuxième (14, 17) compartiments,
**caractérisé en ce que** sur le boîtier (13) ou à l'intérieur, ou au voisinage dudit boîtier, des moyens de guidage (23) pour un câble (27) sont prévus pour l'actionnement du capuchon (25), lesdits moyens de guidage (23) étant pourvus d'un évidement (24) destiné à recevoir l'extrémité de l'arbre mobile (20) s'ajustant à l'intérieur dudit évidement (24), de façon à réaliser le blocage de l'action d'ouverture (25) du capuchon.

2. Mécanisme à soupape pour véhicule automobile suivant la revendication 1, **caractérisé en ce que** l'évidement (24) dans les moyens de guidage (23) est asymétrique, et l'extrémité de l'arbre mobile (20) présente une forme asymétrique coïncidant avec celle de l'évidement (24).

3. Mécanisme à soupape pour véhicule automobile suivant la revendication 1 ou 2, **caractérisé en ce que** lorsque l'arbre mobile (20) est dans la deuxième position, l'extrémité de l'arbre (20) est située dans l'évidement des moyens de guidage (23).

4. Mécanisme à soupape pour véhicule automobile suivant l'une quelconque des revendications précédentes, **caractérisé en ce que** le mécanisme à soupape (12) est couplé à une serrure (29) mécanique à actionnement par clé, adaptée pour placer l'arbre mobile (20) dans la première position.

5. Véhicule automobile comportant un mécanisme à soupape suivant l'une quelconque des revendications 1 à 4.
